# EUROPEAN PATENT APPLICATION

(11) **EP 4 808 250 A1**
(43) Date of publication of application: **16.09.2026**
(21) Application number: 25742296.4
(22) Date of filing: 20.01.2025
(51) Int. Cl.: H04W 74/00, H04W 74/0833, H04L 1/08, H04W 72/044, H04W 4/70, H04L 5/00, H04L 27/26

(54) **ELECTRONIC DEVICE AND METHOD FOR ACQUIRING NARROWBAND RANDOM ACCESS SIGNAL**

(30) Priority: 21.01.2024 KR 20240009181; 08.02.2024 KR 20240019963
(71) Applicant: Samsung Electronics Co., Ltd., Suwon-si, Gyeonggi-do 16677 (KR)
(72) Inventor: LEE, Jonghyeuk, Suwon-si, Gyeonggi-do 16677 (KR); KIM, Hyuncheol, Suwon-si, Gyeonggi-do 16677 (KR)
(74) Representative: Gulde & Partner
(86) International application number: PCT/KR2025/001093
(87) International publication number: WO 2025/155148

(57) **Abstract**

According to one embodiment, a method performed by an electronic device may comprise an operation of acquiring multiple symbol groups related to narrowband random access channel (NPRACH) transmission of a narrowband-Internet of things (NB-IoT) device. The method may comprise an operation of dividing the multiple symbol groups into one or more combined groups on the basis of a designated number of symbol groups. The method may comprise an operation of acquiring power values regarding the one or more combined groups, respectively, thereby acquiring power values regarding the one or more combined groups. The method may comprise an operation of acquiring a random access signal of the NB-IoT device on the basis of the power values regarding the one or more combined groups.

## Description

### [Technical Field]

The present disclosure relates to a wireless communication system. More specifically, the present disclosure relates to an electronic device and a method for obtaining a narrowband random access signal in the wireless communication system.

### [Background Art]

In a mobile communication network, technology for narrowband (NB) Internet of Things (IoT) is used. The NB-IoT technology has a small bandwidth and low transmission speed, but may provide wide coverage. The NB-IoT technology enables low-cost IoT devices to support improved coverage and long battery life. In addition, the NB-IoT technology may collect information data from many IoT devices with low power consumption.

The above-described information may be provided as a related art for the purpose of helping understanding of the present disclosure. No argument or decision is made as to whether any of the above description may be applied as a prior art related to the present disclosure.

### [Disclosure]

### [Technical Solution]

According to an embodiment, an electronic device may comprise a transceiver, at least one processor comprising processing circuitry, and memory, comprising one or more storage mediums, storing instructions. The instructions, when executed by the at least one processor individually or collectively, may cause the electronic device to obtain a plurality of symbol groups related to narrowband random access channel (NPRACH) transmission of a narrowband-internet of things (NB-IoT) device. The instructions, when executed by the at least one processor individually or collectively, may cause the electronic device to, based on a designated number of symbol groups, divide the plurality of symbol groups into one or more combining groups. The instructions, when executed by the at least one processor individually or collectively, may cause the electronic device to obtain power values related to the one or more combining groups, by obtaining a power value related to each of the one or more combining groups. The instructions, when executed by the at least one processor individually or collectively, may cause the electronic device to, based on the power values related to the one or more combining groups, obtain a random access signal of the NB-IoT device.

According to an embodiment, a method performed by an electronic device may comprise obtaining a plurality of symbol groups related to narrowband random access channel (NPRACH) transmission of a narrowband-internet of things (NB-IoT) device. The method may comprise, based on a designated number of symbol groups, dividing the plurality of symbol groups into one or more combining groups. The method may comprise obtaining power values related to the one or more combining groups, by obtaining a power value related to each of the one or more combining groups. The method may comprise, based on the power values related to the one or more combining groups, obtaining a random access signal of the NB-IoT device.

A non-transitory computer readable storage medium may store one or more programs. The one or more programs may comprise instructions, which, when executed by a processor of an electronic device, cause the electronic device to obtain a plurality of symbol groups related to narrowband random access channel (NPRACH) transmission of a narrowband-internet of things (NB-IoT) device. The one or more programs may comprise instructions, which, when executed by the processor of the electronic device, cause the electronic device to, based on a designated number of symbol groups, divide the plurality of symbol groups into one or more combining groups. The one or more programs may comprise instructions, which, when executed by the processor of the electronic device, cause the electronic device to obtain power values related to the one or more combining groups, by obtaining a power value related to each of the one or more combining groups. The one or more programs may comprise instructions, which, when executed by the processor of the electronic device, cause the electronic device to, based on the power values related to the one or more combining groups, obtain a random access signal of the NB-IoT device.

### [Description of the Drawings]

FIG. 1 illustrates a wireless communication system.
FIG. 2 illustrates an example of a base station.
FIG. 3 illustrates an example of a resource structure in a time domain and a frequency domain.
FIG. 4 illustrates an example of a random access procedure.
FIG. 5 illustrates an example of narrowband physical random access channel (NPRACH) transmission.
FIG. 6 illustrates an example of an operation of a base station for compensating a frequency offset and a time offset.
FIG. 7 illustrates an example of an operation of a base station for obtaining combine information.
FIG. 8 illustrates an example of an operation of a base station for identifying energy for detecting a random access signal.
FIG. 9 is a flowchart related to an operation of an electronic device for obtaining a random access signal.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term referring to a signal (e.g., signal, information, message, signaling), a term referring to a resource (e.g., symbol, slot, subframe, radio frame, subcarrier, resource element (RE), resource block (RB), bandwidth part (BWP), occasion), a term for a calculation state (e.g., step, operation, procedure), a term referring to data (e.g., packet, user stream, information, bit, symbol, codeword), a term referring to a channel, a term referring to a network entity, a term referring to a component of a device, and the like, that are used in the following description, are exemplified for convenience of description. Therefore, the present disclosure is not limited to terms described below, and another term having an equivalent technical meaning may be used.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

Although the present disclosure describes various embodiments using terms used in some communication standards (e.g., 3rd Generation Partnership Project (3GPP), extensible radio access network (xRAN), open-radio access network (O-RAN)), these are only examples for explanation. The various embodiments of the present disclosure may be easily modified and applied to other communication systems.

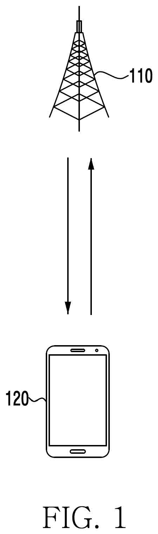

FIG. 1 illustrates a wireless communication system.

Referring to FIG. 1, FIG. 1 illustrates a base station 110 and a terminal 120 as a portion of nodes that utilize a wireless channel in a wireless communication system. FIG. 1 illustrates only one base station, but a wireless communication system may further include another base station that is identical or similar to the base station 110.

The base station 110 is a network infrastructure that provides wireless access to the terminal 120. The base station 110 has coverage defined based on a distance at which a signal may be transmitted. In addition to 'base station', the base station 110 may be referred to as an 'access point (AP)', 'eNodeB (eNB)', '5th generation node', 'next generation nodeB (gNB)', 'wireless point', 'transmission/reception point (TRP)' or other terms having equivalent technical meanings.

The terminal 120, which is a device used by a user, performs communication with the base station 110 through a wireless channel. A link from the base station 110 to the terminal 120 is referred to as a downlink (DL), and a link from the terminal 120 to the base station 110 is referred to as an uplink (UL). In addition, although not illustrated in FIG. 1, the terminal 120 and another terminal may perform communication with each other through a wireless channel. At this time, a link (device-to-device link (D2D)) between the terminal 120 and the other terminal is referred to as a sidelink, and the sidelink may be used interchangeably with a PC5 interface. In some other embodiments, the terminal 120 may be operated without the user's involvement. According to an embodiment, the terminal 120, which is a device performing machine type communication (MTC), may not be carried by the user. Additionally, according to an embodiment, the terminal 120 may be a narrowband (NB)-internet of things (IoT) device.

In addition to 'terminal', the terminal 120 may also be referred to as 'user equipment (UE) ', 'customer premises equipment, (CPE) ', 'mobile station', 'subscriber station', 'remote terminal', 'wireless terminal', 'electronic device', 'user device', or other terms having equivalent technical meanings.

The base station 110 may perform beamforming with the terminal 120. The base station 110 and the terminal 120 may transmit and receive a wireless signal in a relatively low frequency band (e.g., frequency range 1 (FR 1) of NR). In addition, the base station 110 and the terminal 120 may transmit and receive a wireless signal in a relatively high frequency band (e.g., FR 2 (or FR 2-1, FR 2-2, FR 2-3) or FR 3), and a mmWave band (e.g., 28GHz, 30GHz, 38GHz, 60GHz). The base station 110 and the terminal 120 may perform beamforming to improve a channel gain. Herein, the beamforming may include transmission beamforming and reception beamforming. The base station 110 and the terminal 120 may provide directivity to a transmission signal or a reception signal. To this end, the base station 110 and the terminal 120 may select serving beams through a beam search or beam management procedure. After the serving beams are selected, subsequent communication may be performed through a resource in a QCL relationship with the resource transmitting the serving beams.

If large-scale characteristics of a channel carrying a symbol on a first antenna port may be inferred from a channel carrying a symbol on a second antenna port, the first antenna port and the second antenna port may be evaluated to be in the QCL relationship. For example, large-scale characteristics may include at least one of a delay spread, a Doppler spread, a Doppler shift, an average gain, an average delay, and a spatial receiver parameter.

Although FIG. 1 describes that both the base station 110 and the terminal 120 perform beamforming, the embodiments of the present disclosure are not necessarily limited thereto. In some embodiments, the terminal may or may not perform beamforming. In addition, the base station may or may not perform beamforming. That is, either only one of the base station and the terminal may perform beamforming, or neither the base station nor the terminal may perform beamforming.

In the present disclosure, a beam refers to a spatial flow of a signal in a wireless channel, and is formed by one or more antennas (or antenna elements), and this formation process may be referred to as beamforming. Beamforming may include at least one of analog beamforming or digital beamforming (e.g., precoding). A reference signal transmitted based on beamforming may include, for example, a demodulation-reference signal (DM-RS), a channel state information-reference signal (CSI-RS), a synchronization signal/physical broadcast channel (SS/PBCH), and a sounding reference signal (SRS). In addition, an IE such as CSI-RS resource or SRS-resource may be used as a configuration for each reference signal, and this configuration may include information associated with the beam. The information associated with the beam may mean whether a corresponding configuration (e.g., CSI-RS resource) uses the same spatial domain filter as another configuration (e.g., another CSI-RS resource within the same CSI-RS resource set) or a different spatial domain filter, or which reference signal it is quasi-co-located (QCL) with, and if so, what type it is (e.g., QCL type A, B, C, D).

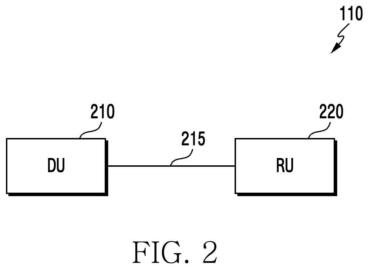

FIG. 2 illustrates an example of a base station. In FIG. 2, a DU and an RU in which functions of a base station are divided and implemented by different entities are described. For communication between the DU and the RU, a fronthaul interface may be used. Unlike a backhaul between a base station and a core network, the fronthaul refers to a link between entities between a wireless LAN and a base station. FIG. 2 illustrates an example of a fronthaul structure between one DU 210 and one RU 220, but this is only for convenience of explanation and the present disclosure is not limited thereto. In other words, the embodiments of the present disclosure may also be applied to a fronthaul structure between one DU and a plurality of RU. For example, the embodiments of the present disclosure may be applied to a fronthaul structure between one DU and two RU. In addition, the embodiments of the present disclosure may also be applied to a fronthaul structure between one DU and three RU.

Referring to FIG. 2, the base station 110 may include a DU 210 and an RU 220. A fronthaul 215 between the DU 210 and the RU 220 may be operated via an Fx interface. For operation of the fronthaul 215, an interface such as an enhanced common public radio interface (eCPRI) or radio over ethernet (ROE) may be used.

As communication technology has been developed, mobile data traffic increased, and thus the bandwidth demand required in a fronthaul between a digital unit and a radio unit has increased significantly. In a deployment such as centralized/cloud radio access network (C-RAN), the DU may be implemented to perform functions for packet data convergence protocol (PDCP), radio link control (RLC), media access control (MAC), and physical (PHY), and the RU may be implemented to further perform functions for PHY layer in addition to a radio frequency (RF) function.

The DU 210 may be in charge of upper layer functions of a wireless network. For example, the DU 210 may perform functions of the MAC layer and a part of the PHY layer. Herein, a part of the PHY layer is a function performed at a higher level among the functions of the PHY layer, and may include, for example, channel encoding (or channel decoding), scrambling (or descrambling), modulation (or demodulation), and layer mapping (or layer demapping). According to an embodiment, if the DU 210 complies with an O-RAN standard, it may be referred to as an O-RAN DU (O-DU). The DU 210 may be replaced with and represented as a first network entity for a base station (e.g., gNB) in embodiments of the present disclosure, as needed.

The RU 220 may be in charge of lower layer functions of a wireless network. For example, the RU 220 may perform a part of the PHY layer, and a RF function. Herein, a part of the PHY layer is a function performed at performed at a relatively lower level than the DU 210 among the functions of the PHY layer, and may include, for example, iFFT conversion (or FFT conversion), cyclic prefix (CP) insertion (or CP removal), and digital beamforming. The RU 220 may be referred to as access unit (AU), access point (AP), transmission/reception point (TRP), remote radio head (RRH), radio unit (RU), or other terms having equivalent technical meanings. According to an embodiment, if the RU 220 complies with the O-RAN standard, it may be referred to as an O-RAN RU (O-RU). The RU 220 may be replaced with and represented as a second network entity for a base station (e.g., gNB) in embodiments of the present disclosure, as needed.

Although FIG. 2 describes that the base station 110 includes the DU 210 and the RU 220, the embodiments of the present disclosure are not limited thereto. The base station according to the embodiments may be implemented in a distributed deployment according to a centralized unit (CU) configured to perform functions of upper layers (e.g., packet data convergence protocol (PDCP), radio resource control (RRC)) of an access network and a distributed unit (DU) configured to perform functions of lower layers. As an example, the distributed unit (DU) may include the digital unit (DU) and the radio unit (RU) of FIG. 2. In addition, as an example, between a core (e.g., 5G core (5GC) or next generation core (NGC)) network and a radio access network (RAN), the base station may be implemented in a structure in which CU, DU, and RU are arranged in order. An interface between the CU and the distributed unit (DU) may be referred to as an F1 interface.

A centralized unit (CU) may be in charge of functions of a higher layer than the DU, by being connected to one or more DUs. For example, the CU may be in charge of radio resource control (RRC) and a function of a packet data convergence protocol (PDCP) layer, and the DU and the RU may be in charge of functions of lower layers. The DU may perform radio link control (RLC), media access control (MAC), and some functions (high PHY) of PHY layer, and the RU may perform remaining functions (low PHY) of the PHY layer. In addition, as an example, a digital unit (DU) may be included in a distributed unit (DU) according to the implementation of distributed deployment of the base station. Hereinafter, unless otherwise defined, it is described as operations of the digital unit (DU) and the RU, but various embodiments of the present disclosure may be applied to both of a base station arrangement including the CU or an arrangement where the DU is directly connected to a core network (i.e., the CU and the DU are integrated into a base station (e.g., NG-RAN node) which is a single entity).

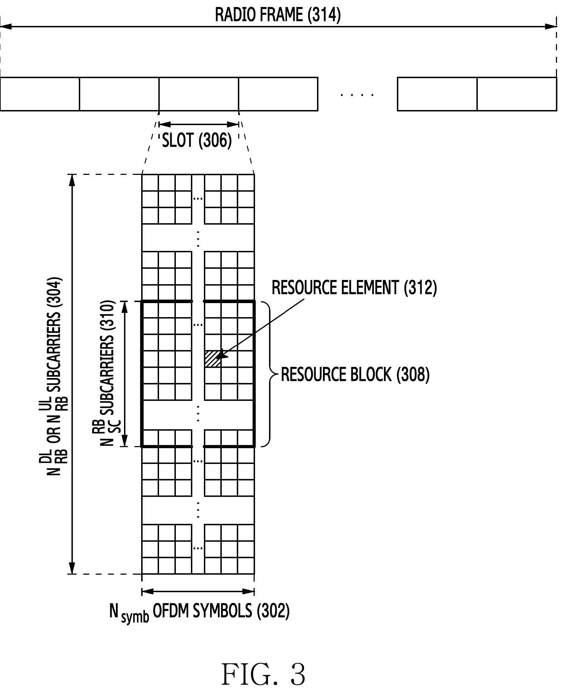

FIG. 3 illustrates an example of a resource structure in a time domain and a frequency domain. FIG. 3 illustrates a basic structure of a time-frequency domain, which is a radio resource domain in which data or a control channel is transmitted in downlink or uplink.

Referring to FIG. 3, a horizontal axis indicates the time domain and a vertical axis indicates the frequency domain. A minimum transmission unit in the time domain is an orthogonal frequency division multiplexing (OFDM) symbol, and N_{symb} OFDM symbols 302 are gathered to form one slot 306. A length of a subframe is defined as 1.0 ms, and a length of a radio frame 314 is defined as 10 ms. A minimum transmission unit in the frequency domain is a subcarrier, and a carrier bandwidth configuring a resource grid is composed of N_{BW} subcarriers 304.

A basic unit of a resource in the time-frequency domain is a resource element (hereinafter referred to as 'RE') 312, and may be indicated as an OFDM symbol index and a subcarrier index. A resource block may include a plurality of resource elements. In an LTE system, a resource block (RB) (or a physical resource block, hereinafter 'PRB') is defined as N_{symb} consecutive OFDM symbols in the time domain and N_{SC}^{RB} consecutive subcarriers in the frequency domain. In an NR system, a resource block (RB) 308 may be defined as N_{SC}^{RB} consecutive subcarriers 310 in the frequency domain. One RB 308 includes N_{SC}^{RB} REs 312 on a frequency axis. In general, a minimum unit of transmission of data is RB and the number of subcarriers is N_{SC}^{RB}=12. The frequency domain may include common resource blocks (CRB). A physical resource block (PRB) may be defined in a bandwidth part (BWP) on the frequency domain. The CRB and PRB numbers may be determined according to a subcarrier spacing. A data rate may increase in proportion to the number of RBs scheduled for a terminal.

In the NR system, a downlink transmission bandwidth and an uplink transmission bandwidth may be different in a case of a frequency division duplex (FDD) system that operates by dividing the downlink and the uplink by a frequency. A channel bandwidth indicates a radio frequency (RF) bandwidth corresponding to a system transmission bandwidth. Table 1 indicates a portion of a correspondence among a system transmission bandwidth, a subcarrier spacing (SCS) and a channel bandwidth defined in the NR system in a frequency band (e.g., a frequency range (FR) 1 (310 MHz to 7125 MHz)) lower than x GHz. Table 2 indicates a portion of a correspondence among a transmission bandwidth, a subcarrier spacing, and a channel bandwidth defined in the NR system in a frequency band (e.g., FR2 (24250 MHz - 52600 MHz) or FR2-2 (52600 MHz to 71,000 MHz)) higher than yGHz. For example, in an NR system having a channel bandwidth of 100 MHz with a subcarrier spacing of 30 kHz, a transmission bandwidth is configured with 273 RBs. In Table 1 and Table 2, N/A may be a bandwidth-subcarrier combination that is not supported in the NR system.

**[Table 1]**

| Channel bandwidth [MHz ] | SCS | 5 | 10 | 20 | 50 | 80 | 100 |
|---|---|---|---|---|---|---|---|
| Trans mission bandwidth configuratio n NRB | 15kH z | 2 5 | 5 2 | 1 06 | 2 07 | N /A | N /A |
| | 30kH z | 1 1 | 2 4 | 5 1 | 1 33 | 2 17 | 2 73 |
| | 60kH z | N /A | 1 1 | 2 4 | 6 5 | 1 07 | 1 35 |

**[Table 2]**

| Chan nel bandwidth [MHz ] | SCS | 50 | 100 | 200 | 400 |
|---|---|---|---|---|---|
| Trans mission bandwidth configuratio n NRB | 60kH z | 66 | 132 | 264 | N/A |
| | 120k Hz | 32 | 66 | 132 | 264 |

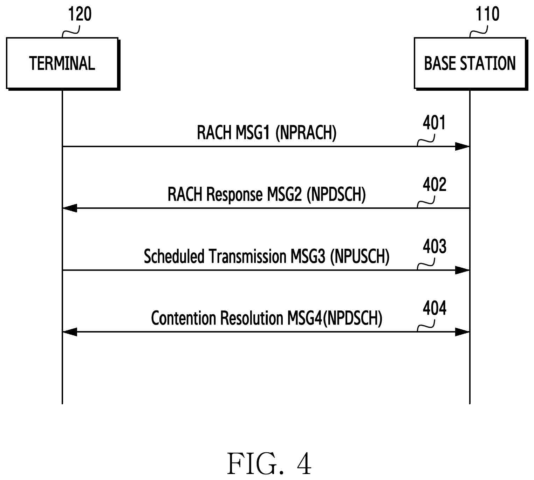

FIG. 4 illustrates an example of a random access procedure. The random access procedure may include signaling between a base station (e.g., a base station 110) and a terminal (e.g., a terminal 120). Although operations of the base station 110 are described in FIG. 4, such description does not exclude that at least a portion of the operations of the base station 110 is performed by a DU 210 and at least another portion thereof is performed by an RU 220. That is, according to an implementation method of the base station 110, for example, all of the operations described below may be performed in a single network entity, or, for another example, the operations described below may be divided and performed in a plurality of network entities (e.g., the DU 210 and the RU 220). The terminal 120 may use NB-IoT technology, which is technology for transmitting a signal on a narrowband (e.g., 180 kHz). Meanwhile, NB-IoT may be referred to as cellular IoT (cIoT) or a term having an equivalent technical meaning thereto.

Referring to FIG. 4, in operation 401, the terminal 120 may transmit a random access signal to the base station 110. The random access signal may be transmitted on a narrowband physical random access channel (NPRACH). The terminal 120 may receive system information related to the NPRACH from the base station. The terminal 120 may transmit a random access preamble to the base station 110 based on the system information. The random access signal may be referred to as a message 1 (MSG 1), a PRACH, an N PRACH, a preamble, a random access channel (RACH) preamble, a RACH signal, a random access preamble, or a term having an equivalent technical meaning thereto. According to a setup of the base station 110, the terminal 120 may repeatedly transmit the random access signal. The number of repetitions of the random access signal may be configured based on a radio resource control (RRC) configuration or the system information of the base station 110.

In operation 402, the base station 110 may transmit a random access response (RAR) to the terminal 120. The random access response may be transmitted on a narrowband physical downlink shared channel (NPDSCH). A message including the random access response may include a message 2 (MSG 2). In response to the random access preamble received from the terminal 120 by the base station 110, the base station 110 may transmit the message to the terminal 120. Downlink scheduling information on the message may be CRC-masked with a random access-radio network temporary identifier (RNTI) (RA-RNTI) and transmitted on an L1/L2 control channel (e.g., a narrowband physical downlink control channel (NPDCCH)). The terminal 120 having received a downlink scheduling signal masked with the RA-RNTI may obtain and decode the random access response on the NPDSCH. For example, the random access response may include scheduling information on an uplink message described below. In addition, for example, the random access response may include information on repetition of the uplink message.

In operation 403, the terminal 120 may transmit an uplink message to the base station 110. The uplink message may be transmitted on a narrowband physical uplink shared channel (NPUSCH). The uplink message may correspond to scheduled transmission. The terminal 120 may transmit the uplink message to the base station 110 based on radio resource allocation information included in the random access response. The uplink message may be referred to as a message 3 (MSG 3). The terminal 120 may repeat transmission of the uplink message by as many times as the number of times obtained based on the random access response.

In operation 404, the base station 110 may transmit a contention resolution message to the terminal 120. The contention resolution message may be transmitted on the NPDSCH. The contention resolution message may be referred to as a message 4 (MSG 4). For example, the contention resolution message may include an RRC connection setup message. Although not illustrated in FIG. 4, after receiving the contention resolution message from the base station 110, the terminal 120 may transmit a connection setup complete message to the base station.

Although a contention-based random access procedure has been described in FIG. 4, embodiments of the present disclosure are not limited thereto. Operations related to reception of a random access signal of an NB-IoT terminal of the present disclosure may also be applied in a non-contention-based random access procedure. In the non-contention-based random access procedure, the base station 110 and the terminal 120 may not perform operation 403 and operation 404.

As described through FIG. 4, the base station 110 and the terminal 120 may perform Internet of Things using a narrowband (i.e., NB-IoT). For example, the narrowband may be 180 kHz. The terminal 120 using NB-IoT technology may be referred to as an NB-IoT UE. The NB IoT UE may perform communication in an area in which a channel environment is not good, such as under a bridge, undersea, or on the sea. In order to compensate for a poor channel environment, a technique such as repetition and power boosting for a specific channel may be used. For example, a technique using the power boosting may include a technique of further reducing a frequency resource area to be transmitted within a specific band and concentrating power per unit time on a specific resource. As an example, the technique may include a method of, when transmitting a specific signal through a resource block (RB) configured with 12 resource elements (REs), concentrating and allocating power to be distributed through an entire RB only to a specific RE, instead of allocating REs in an RB unit. As such, a method of performing communication by concentrating data and power on one RE within an RB may be referred to as a single-tone transmission method.

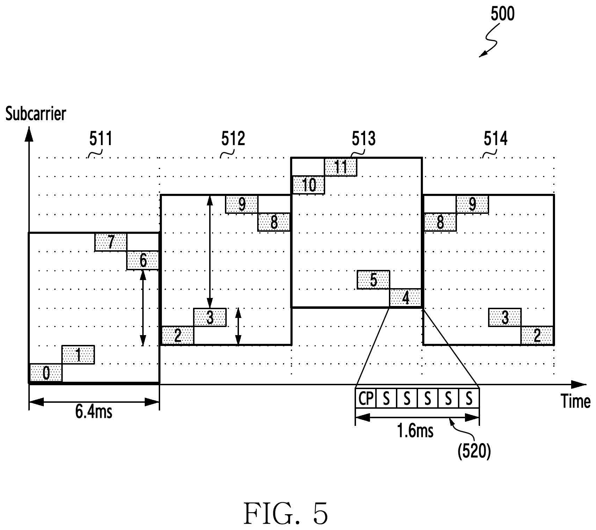

FIG. 5 illustrates an example of narrowband physical random access channel (NPRACH) transmission. The NPRACH means a physical channel through which a random access signal of an NB-IoT UE is transmitted.

Referring to FIG. 5, a resource grid 500 indicates time resources and frequency resources through which a random access signal is transmitted. A horizontal axis of the resource grid 500 indicates time, and a vertical axis indicates a frequency. The random access signal may be transmitted in a narrowband. For example, the narrowband may be 180 kHz. One RE may correspond to 15 kHz, and 12 REs, which is one RB, may be the narrowband.

The NB-IoT UE (e.g., a terminal 120) may transmit a random access signal. For example, the NB-IoT UE may transmit the random access signal based on the number of repetitions. The number of repetitions may be indicated by configuration information received through RRC signaling of a base station (e.g., a base station 110). The NB-IoT UE may repeat transmission of the random access signal by as many times as the number according to the number of repetitions. For example, when the number of repetitions is 1, the NB-IoT UE may transmit the random access signal. For another example, when the number of repetitions is 4, the NB-IoT UE may transmit the random access signal 4 times. For still another example, when the number of repetitions is 16, the NB-IoT UE may transmit the random access signal 16 times.

The random access signal, which is a reference of repetition, may include 4 symbol groups. Among the 4 symbol groups, one symbol group 520 may include one cyclic prefix (CP) and 5 symbols. The 4 symbol groups may be disposed without time gaps (without gaps) between the symbol groups. Each symbol group of the 4 symbol groups may have an independent tone. For example, each symbol group of the 4 symbol groups may correspond to a specific subcarrier distinguished from a subcarrier of another symbol group. The 4 symbol groups may include, in one time, sequentially, a first symbol group, a second symbol group, a third symbol group, and a fourth symbol group. According to a preamble format, a length of the CP may be different. For example, a length T_{CP} of the CP and a total length T_{SEQ} of the 5 symbols may be configured as in the table below. Herein, a basic time unit is *Tₛ* = 1/(15000 × 2048).

**[Table 3]**

| Preamble format I | *T*_{CP} | *T*_{SEQ} |
|---|---|---|
| 0 | 2048*T*ₛ | 5.8192*T*ₛ |
| 1 | 8192*T*ₛ | 5.8192*T*ₛ |

As an example, assume a case in which the number of repetitions is 4. The NB-IoT UE may transmit a random access signal during a first time period 511 (e.g., 6.4 milliseconds (ms)). Within the first time period 511, the NB-IoT UE may transmit a preamble of the first symbol group on a subcarrier #0. Within the first time period 511, the NB-IoT UE may transmit a preamble of the second symbol group on a subcarrier #1. Within the first time period 511, the NB-IoT UE may transmit a preamble of the third symbol group on a subcarrier #7. Within the first time period 511, the NB-IoT UE may transmit a preamble of the fourth symbol group on a subcarrier #6. The NB-IoT UE may transmit preambles corresponding to the random access signal within the narrowband (e.g., 180 kHz) and the first time period 511 corresponding to a first time through frequency hopping.

The NB-IoT UE may transmit a random access signal during a second time period 512. The random access signal of the second time period 512 is the same as the random access signal of the first time period 511, but a frequency position may be changed. Within the second time period 512, the NB-IoT UE may transmit a preamble of the first symbol group on a subcarrier #2. Within the second time period 512, the NB-IoT UE may transmit a preamble of the second symbol group on a subcarrier #3. Within the second time period 512, the NB-IoT UE may transmit a preamble of the third symbol group on a subcarrier #9. Within the second time period 512, the NB-IoT UE may transmit a preamble of the fourth symbol group on a subcarrier #8. The NB-IoT UE may transmit preambles corresponding to the random access signal within the narrowband (e.g., 180 kHz) and the second time period 512 corresponding to a second time through frequency hopping.

The NB-IoT UE may transmit a random access signal during a third time period 513. Within the third time period 513, the NB-IoT UE may transmit a preamble of the first symbol group on a subcarrier #10. Within the third time period 513, the NB-IoT UE may transmit a preamble of the second symbol group on a subcarrier #11. Within the third time period 513, the NB-IoT UE may transmit a preamble of the third symbol group on a subcarrier #5. Within the third time period 513, the NB-IoT UE may transmit a preamble of the fourth symbol group on a subcarrier #4. The NB-IoT UE may transmit preambles corresponding to the random access signal within the narrowband (e.g., 180 kHz) and the third time period 513 corresponding to a third time through frequency hopping.

The NB-IoT UE may transmit a random access signal during a fourth time period 514. Within the fourth time period 514, the NB-IoT UE may transmit a preamble of the first symbol group on the subcarrier #8. Within the fourth time period 514, the NB-IoT UE may transmit a preamble of the second symbol group on the subcarrier #9. Within the fourth time period 514, the NB-IoT UE may transmit a preamble of the third symbol group on the subcarrier #3. Within the fourth time period 514, the NB-IoT UE may transmit a preamble of the fourth symbol group on the subcarrier #2. The NB-IoT UE may transmit preambles corresponding to the random access signal within the narrowband (e.g., 180 kHz) and the fourth time period 514 corresponding to a fourth time through frequency hopping.

As described through FIG. 5, the NB-IoT UE may transmit a random access preamble in a single-tone transmission method in the same symbol group when transmitting one time. The NPRACH may be used in an environment in which a channel change is small. Meanwhile, since a symbol group is designed with a small subcarrier spacing and a long CP, detection performance of the random access signal is more sensitive to a frequency offset than to a time offset. In the single-tone transmission method, when a residual frequency offset is large with respect to a subcarrier spacing (SCS), power of a received NPRACH preamble may leak to an adjacent subcarrier, and thus interference with respect to another preamble may increase. The increased interference causes deterioration of detection performance of a receiver side.

In the following specification, in order to compensate for a time offset, the base station (e.g., the base station 110) or a device (e.g., a DU 210 or an RU 220) of the base station for obtaining uplink timing synchronization will be described.

A method of obtaining good reception performance in an NB-IoT system is to estimate a frequency offset, correct a reception signal by using the estimated frequency offset, then estimate an uplink timing offset, and determine whether a random access signal is received by using energy information of the reception signal for which the uplink timing offset is corrected. However, according to the above-described method, there is a problem that implementation complexity is excessively high. Specifically, it is as follows.

A random access signal may include a plurality of OFDM symbols. For example, the random access signal may include L × M symbols. The random access signal includes M symbol groups, and each symbol group may include L symbols. As an example, among the M symbol groups, a reception signal at an 1-th symbol of an m-th symbol group may be represented as follows. $\begin{matrix}{y}_{m , l} \left(n\right) = h \left(m, l\right) ⋅ {e}^{i 2 π Ω \left(m\right) \left(n-D-l\right) / N} \times {e}^{i 2 π Δ f \left(m\left({N}_{cp}+LN\right)+lN+n-D\right) / N} / N + {ω}_{m , l} \left(n\right) \\ = A ⋅ {e}^{i 2 πn \left(Ω\left(m\right)+Δf\right) / N} + {ω}_{m , l} \left(n\right) , \\ n = 0 , 1 , … N - 1 ; m = 0 , … , M - 1 ; l = 0 , … , L - 1 ; D ∈ \left\{0,1,…,{N}_{cp}-1\right\}\end{matrix}$

Referring to Equation 1, the Ω(*m*) indicates a subcarrier corresponding to the m-th symbol group, and the *Y_{m,l}*(*.*) indicates a reception signal at the l-th symbol of the m-th symbol group. The *h*(*m, l*) indicates a channel coefficient at the l-th symbol of the m-th symbol group, the *N_{cp}* indicates the number of samples of a CP, the *N* indicates the number of samples of a symbol, the D indicates a time offset (i.e., a timing advance (TA) for uplink timing), and the Δ*f* indicates a frequency offset (or a frequency offset normalized by an SCS). The *ω_{m,l}*(*n*) indicates additive white gaussian noise (AWGN). The D indicates a residual frequency offset.

In Equation 1, A may be represented as follows. $A = \frac{h \left(m, l\right)}{N} \times {e}^{i 2 π \left(Δf\left(m\left({N}_{cp}+LN\right)+lN-D\right)-DΩ\left(m\right)\right) / N}$

A random access signal in a frequency domain in which Equation 1 described above is derived according to FFT may be represented as follows. $\begin{matrix}{Y}_{m , l} \left(Ω\left(m\right)\right) = h \left(m, l\right) ⋅ {e}^{iπ Δ f \left(N-1-2D\right) / N} \frac{sin \left(πΔf\right)}{Nsin \left(πΔf/N\right)} \times {e}^{i 2 π Δ f \left(m\left({N}_{cp}+LN\right)+lN\right) / N} \\ ⋅ {e}^{- i 2 πD \left(m\right) / N} \\ m = 0 , … , M - 1 ; l = 0 , … , L - 1\end{matrix}$

When assuming that the channel coefficient *h*(*m, l*) in the above equation is the same as a period of the random access signal of the NPRACH, it may be identified that a phase change of the random access signal is determined by the time offset D and the frequency offset Δ*f.*

The base station (e.g., the base station 110) or the DU (e.g., the DU 210) of the base station may generate a local sequence having a phase variation corresponding to the time offset D and the frequency offset Δ*f.* Based on the local sequence, the base station or the DU 210 may identify a correlation between the local sequence and a symbol group m and a symbol number 1 in the symbol group. When a signal exists at a position according to an actual time offset and a frequency offset, the base station 110 may obtain peak energy according to the correlation. For example, the peak energy may be obtained based on the following equation. $J \left(D,Δf\right) = {\sum }_{g = 0}^{L / Q - 1} {\left|{J}_{g}\left(D,Δf\right)\right|}^{2}$

Based on Equation 3 and Equation 4, a correlation between a time offset and a frequency offset may be configured based on the following equation. Through joint estimation for a given time offset and frequency offset, a time offset and a frequency offset that cause having the greatest correlation value (in other words, causing peak energy to be greatest) may be estimated. ${J}_{g} \left(D,Δf\right) = {\sum }_{m = gQ}^{\left(g+1\right) Q - 1} {\sum }_{l = 0}^{L - 1} {Y}_{m , l} \left(Ω\left(m\right)\right) \times {e}^{- i 2 π Δ f \left(m\left({N}_{cp}+LN\right)+lN\right) / N} ⋅ {e}^{i 2 π D Ω \left(m\right) / N}$

Based on Equation 5, in order to estimate a time offset and a frequency offset providing the greatest correlation, a two dimensional FFT may be used. For example, a right side of Equation 5 may be transformed into the following equation. ${\sum }_{m = gQ}^{\left(g+1\right) Q - 1} \left(\left({\sum }_{l = 0}^{L - 1} {Y}_{m , l} \left(Ω\left(m\right)\right) ⋅ {e}^{- i 2 π Δ fl}\right){e}^{- i 2 π Δ fm \frac{{N}_{cp} + LN}{N}}\right)$

Based on the *J_{g}* (*D,* Δ*f*) derived through Equation 6, an estimation result of a time offset within a range of D ∈ [0, *N_{CP}*] and an estimation result of a frequency offset (e.g., a normalized frequency offset) within a range of Δ*f* ∈ (-0.5, +0.5) may be obtained.

For a random access signal of 3GPP NB-IoT, a multi-level frequency hopping method in which a single tone is used and a tone is changed every certain period is used. As described above, jointly estimating a frequency offset and a time offset (or uplink timing) and identifying energy for detection of a random access signal has a problem of high implementation complexity in detecting the random access signal. In order to solve the above-described problem, embodiments of the present disclosure may be related to a method of identifying energy of an optimized reception signal for detection of a random access signal (or an NPRACH signal) optimized for multi-level frequency hopping.

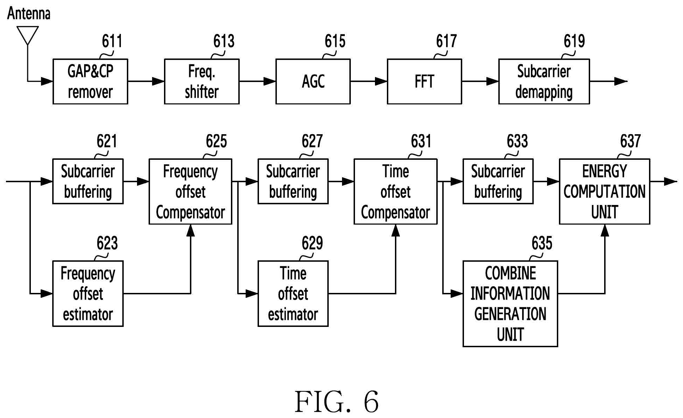

FIG. 6 illustrates an example of an operation of a base station for compensating a frequency offset and a time offset. In FIG. 6, functional blocks for processing a signal received through an antenna are described. Each functional block may be understood as an operation in a network entity (e.g., a base station 110, a DU 210, or an RU 220).

Referring to FIG. 6, in operation 611, the base station 110 may perform gap and CP removal. A gap and a CP may be removed from a random access signal received from each antenna according to a 3GPP NB-IoT standard.

In operation 613, the base station 110 may perform frequency shifting. The base station 110 may perform frequency shifting on a signal from which the gap and the CP are removed.

In operation 615, the base station 110 may perform automatic gain control (AGC). Through AGC for the signal obtained through the operation 613, the base station may determine a gain and a phase to be applied to the signal.

In operation 617, the base station 110 may perform FFT. The base station 110 may perform FFT on the signal in order to change the signal obtained through the operation 615 from a time domain to a frequency domain.

In operation 619, the base station 110 may perform subcarrier demapping. For example, the base station 110 may demap the output signal of the operation 617 into subcarriers (e.g., 48 = 12 x 4 subcarriers) used for the random access signal.

In operation 621, the base station 110 may perform subcarrier buffering. The demapped signal may be buffered until a result of frequency offset estimation is derived.

In operation 623, the base station 110 may estimate a frequency offset. The base station 110 may estimate the frequency offset based on an inter-symbol correlation operation. The estimated frequency offset may be used to compensate for a frequency difference existing in the random access signal. For example, a functional block corresponding to the operation 623 (i.e., a frequency offset estimator) may include a total noise estimator, a frequency correlator, and a frequency offset decision block.

In operation 625, the base station 110 may perform frequency offset compensation. The base station 110 may perform frequency offset compensation by applying the estimated frequency offset result to the demapped signal.

In operation 627, the base station 110 may perform subcarrier buffering. The signal for which the frequency offset is compensated may be buffered until a result of time offset estimation is derived.

In operation 629, the base station 110 may estimate a time offset. The base station 110 may estimate the time offset based on the inter-symbol correlation operation. The estimated time offset may be used to compensate for a time difference existing in the random access signal.

In operation 631, the base station 110 may perform time offset compensation. The base station 110 may perform time offset compensation by applying the estimated time offset result to the signal for which the frequency offset is compensated.

In operation 633, the base station 110 may perform subcarrier buffering. The signal for which the time offset is compensated may be buffered until an identification result of energy of the signal is derived.

In operation 635, the base station 110 may generate (or obtain) combine information. For example, the base station 110 may generate (or obtain) combine information for determining the number of symbol groups on which coherent combining is to be performed. The base station 110 may generate (or obtain) the combine information based on a correlation value between symbol groups within a time period (e.g., a first time period 511) in which the random access signal is transmitted.

In operation 637, the base station 110 may obtain (or compute) energy for a signal divided based on the combine information. The energy for the signal divided based on the combine information may be used to determine whether the random access signal (or an NPRACH signal) is received. For example, when a magnitude of the energy is less than or equal to a designated value, the base station 110 may identify (or determine) that the random access signal (or the NPRACH signal) is not received. When the magnitude of the energy exceeds the designated value, the base station 110 may identify (or determine) that the random access signal (or the NPRACH signal) is received.

Although the operation 611 to the operation 637 are described in FIG. 6 as the operations of the base station 110, embodiments of the present disclosure are not limited thereto. The operations described in FIG. 6 may be divided among a plurality of network entities (e.g., the DU 210 and the RU 220), and each network entity may be configured to perform the corresponding operation. In other words, in order to lower a transmission capacity of a wired network and reduce an installation cost of the wired network, 'function split' which lowers a transmission capacity of a fronthaul by transferring some functions of a modem of the DU to the RU may be used. In order to reduce a burden of the DU, a role of the RU, which is responsible only for an existing RF function, may be expanded to a partial function of a physical layer. As the RU performs functions of a higher layer, a throughput of the RU increases, so that a transmission bandwidth in the fronthaul increases, and at the same time, a delay time requirement constraint due to response processing may be lowered. Meanwhile, as the RU performs functions of the higher layer, a virtualization gain is reduced, and a size, a weight, and a cost of the RU increase. In consideration of a trade-off between the above-described advantages and disadvantages, implementation of an optimal function split is required.

In a case of downlink (DL) for transmitting a signal to the terminal 120 through a wireless network, the network entities may sequentially perform channel encoding/scrambling, modulation, layer mapping, antenna mapping, RE mapping, digital beamforming (e.g., precoding), iFFT conversion/CP insertion, and RF conversion. In a case of uplink (UL) for receiving a signal from the terminal 120 through a wireless network, the network entities may sequentially perform RF conversion, FFT conversion/CP removal, digital beamforming (pre-combining), RE demapping, channel estimation, layer demapping, demodulation, and decoding/descrambling. Separation with respect to uplink functions and downlink functions may be defined in various types by needs between vendors, discussions on a standard, and the like according to the above-described trade-off. According to an embodiment, in a specific function split (e.g., Option 7-2x), the RU 220 may perform iFFT conversion/CP insertion in DL of a PHY function and FFT conversion/CP removal in UL thereof, and the DU 210 may perform remaining PHY functions. For example, the above-described operation 611 to operation 617 may be performed in the RU 220, and the operation 619 to the operation 637 may be performed in the DU 210. According to another embodiment, in a specific function split (e.g., Option 7-2), the RU 220 may perform funtions up to RE mapping (or RE demapping) in both DL and UL, and the DU 210 may perform higher PHY functions after the RE mapping (or the RE demapping). For example, the above-described operation 611 to operation 621 may be performed in the RU 220, and the operation 623 to the operation 637 may be performed in the DU 210. According to still another embodiment, in a specific function split (e.g., Option 6), the RU 220 may perform functions up to encoding/scrambling (or decoding/descrambling) in both DL and UL, and the DU 210 may perform higher PHY functions after modulation (or demodulation). For example, the above-described operation 611 to operation 637 may be performed in the RU 220.

According to the above-described operation 629 and operation 631, the base station 110 may identify a delay value (or a time offset) of the random access signal. The base station 110 may use the delay value as information for obtaining uplink synchronization of an NB-IoT system. The base station 110 may remove a frequency offset generated in an uplink transmission and reception process from the random access signal in a frequency domain. A random access signal from which the frequency offset is removed may be represented as follows.
$\begin{matrix}Y _ {delay}_{m , l} \left(Ω\left(m\right)\right) = h \left(m, l\right) ⋅ {e}^{- i 2 πD Ω \left(m\right) / N} \\ m = 0 , … , M - 1 ; l = 0 , … , L - 1\end{matrix}$

Referring to Equation 7, the *Y_delay_{m,l}*(Ω(*m*)) indicates a random access signal for which a frequency offset is removed (or compensated). The random access signal for which the frequency offset is removed may be identified by as many as the number of antennas of the base station 110.

The base station 110 may compensate for a delay of a random access signal received through each antenna by using a time offset identified as a value between 0 and *N_{cp}.* The random access signal for which the delay (or the time offset) is compensated may be represented as follows.
$\begin{matrix}{Y}_{m , l}^{∗} \left(Ω\left(m\right)\right) = h \left(m, l\right) ⋅ {e}^{- i 2 π Ω \left(m\right) / N} \\ m = 0 , … , M - 1 ; j = 0 , … , L - 1\end{matrix}$

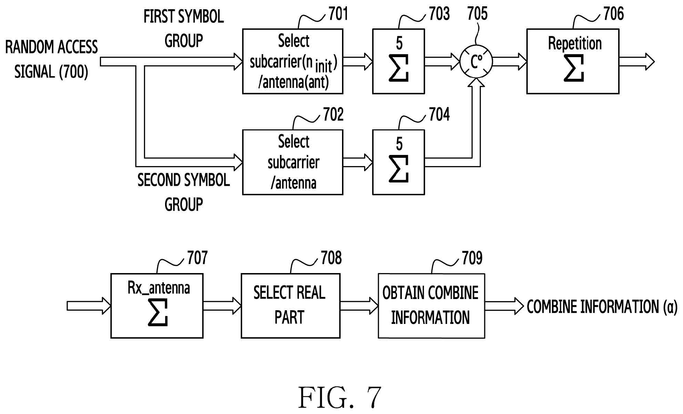

Referring to Equation 8, the ${Y}_{m , l}^{∗} \left(Ω\left(m\right)\right)$ is a random access signal for which a time offset is compensated (or removed). The ${Y}_{m , l}^{∗} \left(Ω\left(m\right)\right)$ is the random access signal on which the operation 631 is performed. The base station 110 may obtain combine information by using the random access signal for which the time offset is compensated. A detailed operation for obtaining the combine information in the base station 110 will be described later with reference to FIG. 7.

FIG. 7 illustrates an example of an operation of a base station for obtaining combine information.

Referring to FIG. 7, a base station 110 may perform operation 701 to operation 709 in order to obtain combine information. The operation 701 to the operation 709 described below may correspond to the operation 635 of FIG. 6.

The base station 110 may identify a correlation value between two symbol groups by using a random access signal 700. The random access signal 700 may be a random access signal (e.g., the signal according to Equation 8) for which a frequency offset and a time offset are compensated.

For example, a random access signal (e.g., a PRACH signal) transmitted in an NPRACH may include 4 symbol groups within a designated resource (e.g., a designated time period and/or a designated frequency range). The random access signal may be repeatedly transmitted according to the designated number of repetitions. One random access signal may be transmitted within one designated time period. The random access signal may be repeatedly transmitted in a repeated designated time period.

For example, the base station 110 may identify a correlation value between 2 symbol groups among 4 symbol groups within one designated time period. For example, the base station 110 may identify a correlation value between a first symbol group and a fourth symbol group among 4 symbol groups within one designated time period. Referring to FIG. 5, the base station 110 may identify a correlation value between the first symbol group (or the preamble of the first symbol group) transmitted on the subcarrier #0 and the fourth symbol group (or the preamble of the fourth symbol group) on the subcarrier #6 within the time period 511. The first symbol group and the fourth symbol group selected within the time period 511 are exemplary, and are not limited thereto.

In operation 701, the base station 110 may select (or identify) an antenna and a subcarrier corresponding to the first symbol group (e.g., the first symbol group among the 4 symbol groups) among the random access signal 700. The base station 110 may obtain a first signal corresponding to the selected subcarrier.

In operation 702, the base station 110 may select (or identify) an antenna and a subcarrier corresponding to a second symbol group (e.g., the fourth symbol group among the 4 symbol groups) among the random access signal 700. The base station 110 may obtain a second signal corresponding to the selected subcarrier.

In operation 703, the base station 110 may perform coherent combining for symbols included in the first symbol group based on the first signal. For example, the base station 110 may obtain a first combining signal by performing coherent combining for 5 symbols included in the first symbol group.

In operation 704, the base station 110 may perform coherent combining for symbols included in the second symbol group based on the second signal. For example, the base station 110 may obtain a second combining signal by performing coherent combining for 5 symbols included in the second symbol group.

In operation 705, the base station 110 may identify a correlation value between the first combining signal and the second combining signal. The correlation value between the first combining signal and the second combining signal may be represented as follows. $\begin{matrix}corr _ tem {p}_{r} = {\sum }_{l = 0}^{L - 1} {Y}_{r \times 4 , l}^{∗} \left(Ω\left(r\times 4\right)\right) ⋅ conj \left({\sum }_{l = 0}^{L - 1} {Y}_{r \times 4 + 3 , l}^{∗} \left(Ω\left(r\times 4+3\right)\right)\right) , \\ r = 0 ∼ repetition - 1\end{matrix}$

Referring to Equation 9, the is a correlation value between a first combining signal for a first symbol group among the 4 symbol groups and a second combining signal for a fourth symbol group among the 4 symbol groups. This is exemplary and is not limited thereto. For example, a correlation value between a first combining signal for a second symbol group among the 4 symbol groups and a second combining signal for a third symbol group among the 4 symbol groups may be represented as follows. $\begin{matrix}corr _ {temp}_{r} = {\sum }_{l = 0}^{L - 1} {Y}_{r \times 4 + 1 , l}^{∗} \left(Ω\left(r\times 4+1\right)\right) ⋅ conj \left({\sum }_{l = 0}^{L - 1} {Y}_{r \times 4 + 2 , l}^{∗} \left(Ω\left(r\times 4+2\right)\right)\right) , \\ r = 0 ∼ repetition - 1\end{matrix}$

According to an embodiment, the *corr_{tempᵣ}* may be identified (or configured or obtained) based on a combination of correlation values between combining signals. For example, the *corr_{tempᵣ}* may be identified based on a combination of a first correlation value and a second correlation value. The first correlation value may be a correlation value between 2 combining signals. The second correlation value may be a correlation value between 2 combining signals. As an example, the first correlation value may be a correlation value between the first combining signal for the first symbol group among the 4 symbol groups and the second combining signal for the fourth symbol group among the 4 symbol groups. The second correlation value may be a correlation value between the first combining signal for the second symbol group among the 4 symbol groups and the second combining signal for the third symbol group among the 4 symbol groups.

For example, the *corr_{tempᵣ}* is configured based on the first correlation value (e.g., the correlation value according to Equation 9), and the second correlation value (e.g., the correlation value according to Equation 10) may be used supplementarily for identification (or configuration or obtaining) of the *corr_{tempᵣ}*.

For example, the *corr_{tempᵣ}* may be identified (or configured or obtained) by applying a first weight to the first correlation value and applying a second weight to the second correlation value. The *corr_{tempᵣ}* may be represented as in the following equation. $corr _ tem {p}_{r} = \left(\frac{{w}_{0}}{{w}_{0} + {w}_{1}}\right) \times corr _ tem {p}_{r 1} + \left(\frac{{w}_{1}}{{w}_{0} + {w}_{1}}\right) \times corr _ tem {p}_{r 2}$

Referring to Equation 11, the *corr_temp*_{*r*1} is the first correlation value (e.g., the correlation value according to Equation 9). The *corr_temp*_{*r*2} is the second correlation value (e.g., the correlation value according to Equation 10). The w₀ is the first weight. The w₁ is the second weight.

In operation 706, the base station 110 may accumulate (or sum) correlation values identified according to the designated number of repetitions (e.g., 4 times). The base station 110 may identify a first cumulative correlation value through the operation 706. The first cumulative correlation value may be represented as follows. $corr _ 1 = {\sum }_{r = 0}^{repetition - 1} corr _ tem {p}_{r}$

Referring to Equation 12, the corr_1 is the first cumulative correlation value.

In operation 707, the base station 110 may accumulate (or sum) the first cumulative correlation value by as many times as the number of antennas of the base station 110. The base station 110 may identify a second cumulative correlation value through the operation 707. The second cumulative correlation value may be represented as follows. $corr = {\sum }_{ant =}^{{Rx}_{ant} - 1} corr _ 1$

Referring to Equation 13, the *corr* is the second cumulative correlation value.

In operation 708, the base station 110 may select a real part for the second cumulative correlation value corr. The base station 110 may identify the real part for the second cumulative correlation value corr. The second cumulative correlation value corr is a complex number. The base station 110 may identify a value of the real part for the second cumulative correlation value corr. The value of the real part for the second cumulative correlation value corr may be represented as follows. $corr _ info = real \left(corr\right)$

Referring to Equation 14, the corr_info is a value of the real part for the second cumulative correlation value corr.

In operation 709, the base station 110 may obtain (or generate) combine information by using the value corr_info of the real part for the second cumulative correlation value.

For example, when the designated number of repetitions is 4, combine information may be obtained according to a magnitude of the corr_info. The combine information according to the magnitude of the corr_info may be configured as in the table below.

**[Table 4]**

| | Combine information( α } |
|---|---|
| corr_info > th₀ | 16 |
| th₀ ≥ corr_info > th₁ | 8 |
| th₁ ≥ corr_info > th₂ | 4 |
| th₂ ≥ corr_info > th₃ | 2 |

Referring to Table 4, the th₀, the th₁, the th₂, and the th₃ are designated threshold values for identifying (or determining) the combine information α. The designated threshold values may be changed. Table 4 indicates an example in which the combine information α is identified as one of 4 values (16, 8, 4, and 2) according to the magnitude of the corr_info, but this is exemplary and is not limited thereto. A size of Table 4 may be changed, and a range of the combine information α may be set as one of 1 to M. The M is the number of all symbol groups according to the designated number of repetitions. When 4 symbol groups within the designated time period are included and the number of repetitions is R, the M is 4 × *R*. For example, a random access signal in a frequency domain used by each NB-IoT UE may be configured with symbol groups of 4 × *R.* The R may be the number of repetitions allocated to each NB-IoT UE.

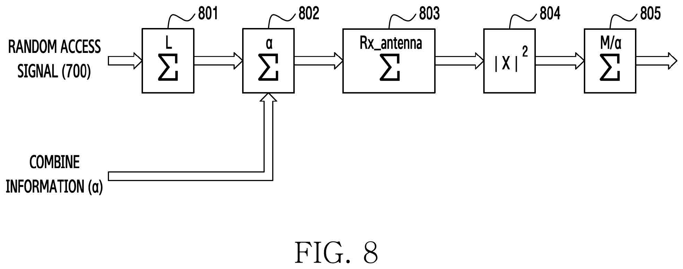

According to an embodiment, the base station 110 may identify energy for detecting a random access signal by using the combine information α obtained according to the operation 701 to the operation 709. A detailed operation for identifying the energy for detecting the random access signal by using the combine information α will be described later with reference to FIG. 8.

FIG. 8 illustrates an example of an operation of a base station for identifying energy for detecting a random access signal.

Referring to FIG. 8, a base station 110 may perform operation 801 to operation 805 in order to identify energy for detecting a random access signal. The operation 801 to the operation 805 described below may correspond to the operation 637 of FIG. 6.

The base station 110 may identify the energy for detecting the random access signal by using a random access signal 700. The random access signal 700 may be a random access signal (e.g., the signal according to Equation 8) for which a frequency offset and a time offset are compensated.

In operation 801, for each symbol group of the random access signal 700, the base station 110 may perform coherent combining by as many times as the number of symbols included in the corresponding symbol group. For example, the number of symbols within a symbol group of the random access signal 700 may be L (e.g., 5). The base station 110 may perform coherent combining on a signal of the L symbols. The base station 110 may obtain a combining signal of each symbol group. The base station 110 may perform coherent combining on symbol groups according to combine information. The base station 110 may obtain a combining signal of the symbol groups according to the combine information. For example, the base station 110 may perform coherent combining during *α* × *L* symbol periods. The base station 110 may obtain the combining signal of the symbol groups according to the combine information by performing coherent combining during the *α* × *L* symbol periods. The combining signal of the symbol groups according to the combine information may be represented as follows. $\begin{matrix}{J}_{g} = {\sum }_{m = gQ}^{\left(g+1\right) Q - 1} {\sum }_{l = 0}^{L - 1} {Y}_{m , l}^{∗} \left(Ω\left(m\right)\right) \\ g = 0 , … , M / α - 1 ; Q = α ; l = 0 , … , L - 1\end{matrix}$

In operation 803, the base station 110 may accumulate (or sum) the combining signal of the symbol groups according to the combining information by as many times as the number Rx_ant of antennas of the base station 110. The combining signal accumulated (or summed) by as many times as the number Rx_ant of antennas may be represented as follows. ${J}_{g}^{∗} = {\sum }_{ant = 0}^{Rx _ ant - 1} {J}_{g}$

In operation 804, the base station 110 may identify (or obtain) a power value of the combining signal accumulated (or summed) by as many times as the number of antennas. In operation 805, the base station 110 may accumulate $g \left(=\frac{M}{α}\right)$ power values. The base station 110 may identify the energy for detecting the random access signal by accumulating g power values. The energy for detecting the random access signal may be represented as follows. $E = {\sum }_{i = 0}^{g - 1} {\left|{I}_{i}^{∗}\right|}^{2}$

Referring to Equation 17, the E is the energy for detecting the random access signal. When the E exceeds a designated value, the base station 110 may identify (or determine) that the random access signal (or an NPRACH signal) is received. When the E is less than or equal to the designated value, the base station 110 may identify (or determine) that the random access signal (or the NPRACH signal) is not received.

According to the above-described operation 801 to operation 805, the base station 110 may perform the operation for detecting the random access signal. According to the above-described embodiment, implementation complexity for detection of the random access signal may be lowered, and performance related to detection of the random access signal may be improved.

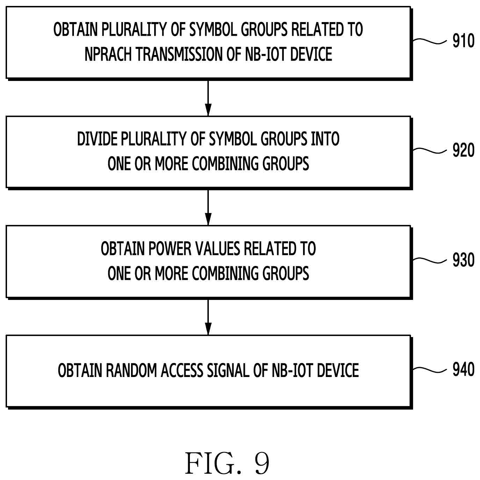

FIG. 9 is a flowchart related to an operation of an electronic device for obtaining a random access signal.

Referring to FIG. 9, in operation 910, an electronic device (or a processor of the electronic device) may obtain a plurality of symbol groups related to NPRACH transmission of an NB-IoT device. For example, the electronic device may include a digital unit (or a distributed unit) (DU). For example, the electronic device may obtain a signal related to the NPRACH transmission. The signal related to the NPRACH transmission may be obtained through an antenna (or at least one antenna) of a radio unit (RU). The electronic device may identify the signal related to NRPACH transmission obtained through the RU.

According to an embodiment, the electronic device may identify a frequency offset and a time offset based on the signal related to the NPRACH transmission. For example, an operation of identifying the frequency offset based on the signal related to the NPRACH transmission may be related to the operation 623 of FIG. 6. For example, an operation of identifying the time offset based on the signal related to the NPRACH transmission may be related to the operation 629 of FIG. 6. An order of the operation of identifying the frequency offset and the operation of identifying the time offset may be changed. The operation of identifying the frequency offset and the operation of identifying the time offset may also be performed in parallel.

The electronic device may compensate the frequency offset and the time offset to the signal related to the NPRACH transmission. For example, the electronic device may compensate the time offset after compensating the frequency offset to the signal related to the NPRACH transmission. An order of the operation of compensating the frequency offset and the operation of compensating the time offset may be changed.

The electronic device may obtain the plurality of symbol groups based on compensating the frequency offset and the time offset to the signal related to the NPRACH transmission.

For example, the random access signal may be transmitted according to the number of repetitions set for the NPRACH transmission. The plurality of symbol groups may be obtained based on repetition of the random access signal according to the number of repetitions.

The random access signal may be transmitted through one repetition period (e.g., the first time period 511 of FIG. 5). When the number of repetitions set for the NPRACH transmission is 5, the random access signal may be transmitted in each of 5 repetition periods. The random access signal transmitted through one repetition period may include one or more symbol groups. The number of symbol groups included in the random access signal may be set to 4. For example, when the number of repetitions is 5, since the number of symbol groups included in the random access signal is 4, the number of the plurality of symbol groups may be 20.

For example, one symbol group may include 5 symbols. One symbol group may include 5 symbols configured based on a cyclic prefix (CP) and a designated sequence.

In operation 920, the electronic device may divide the plurality of symbol groups into one or more combining groups. For example, the electronic device may divide the plurality of symbol groups into the one or more combining groups based on the designated number of symbol groups.

For example, the electronic device may determine (or identify) the designated number. The electronic device may perform a correlation operation between at least two symbol groups among the plurality of symbol groups.

The electronic device may identify at least two symbol groups among the plurality of symbol groups. As an example, the electronic device may identify two symbol groups among the plurality of symbol groups. The electronic device may identify two symbol groups included in one repetition period. The electronic device may perform a correlation operation between the two symbol groups included in one repetition period. The two symbol groups included in one repetition period may include a first symbol and a last symbol within one repetition period.

The electronic device may perform a coherent combining operation for each of at least two symbol groups. For example, the electronic device may perform a coherent combining operation for symbols (e.g., 5 symbols) included in a first symbol group. The electronic device may obtain a first combining signal according to the coherent combining operation for the symbols included in the first symbol group. The electronic device may perform a coherent combining operation for symbols (e.g., 5 symbols) included in a second symbol group. The electronic device may obtain a second combining signal according to the coherent combining operation for the symbols included in the second symbol group. The electronic device may identify a correlation value based on identifying a correlation value between the first combining signal and the second combining signal. The electronic device may identify correlation values according to the designated number of repetitions similar to the above-described operation. The electronic device may identify a first cumulative correlation value by accumulating the correlation values. The electronic device may obtain a second cumulative correlation value by accumulating the first cumulative correlation value by as many times as the number of antennas. The electronic device may determine the second cumulative correlation value as an output value of a correlation operation. The electronic device may identify a real part of the output value as a result of the correlation operation.

The electronic device may determine the designated number based on a result of a correlation operation between at least two symbol groups. The electronic device may determine the designated number based on the result of the correlation operation between the at least two symbol groups. The electronic device may identify that the result of the correlation operation is within one of a first range to a fourth range. The electronic device may identify the designated number as the first number (e.g., 16) based on identifying that the result of the correlation operation is within the first range. The electronic device may identify the designated number as the second number (e.g., 8) based on identifying that the result of the correlation operation is within the second range. The electronic device may identify the designated number as the third number (e.g., 4) based on identifying that the result of the correlation operation is within the third range. The electronic device may identify the designated number as the fourth number (e.g., 2) based on identifying that the result of the correlation operation is within the fourth range.

In operation 930, the electronic device may obtain a power value related to one or more combining groups. For example, the electronic device may perform a coherent combining operation for each of the one or more combining groups. The electronic device may obtain a power value related to each of the one or more combining groups by obtaining a power value of a signal according to the coherent combining operation for each of the one or more combining groups.

In operation 940, the electronic device may obtain a random access signal of the NB-IoT device. For example, the electronic device may obtain the random access signal of the NB-IoT device based on power values related to the one or more combining groups.

For example, the electronic device may identify a summed power value of the power values related to the one or more combining groups. The electronic device may obtain the random access signal based on the summed power value that is greater than or equal to a designated power value. The electronic device may determine that the random access signal is received when the summed power value is greater than or equal to the designated power value. The electronic device may determine that the random access signal is not received when the summed power value is less than the designated power value.

For example, when the plurality of symbol groups is 16 and the designated number is 8, the plurality of symbol groups may be divided into a first combining group and a second combining group. The electronic device may obtain a first power value of a signal according to a coherent combining operation for the first combining group, and obtain a second power value of a signal according to a coherent combining operation for the second combining group. The electronic device may identify a summed power value of the first power value and the second power value. The electronic device may obtain the random access signal based on the summed power value that is greater than or equal to the designated power value.

According to an embodiment, an electronic device (e.g., a base station 110 or a DU 320) may comprise a transceiver, at least one processor comprising processing circuitry, and memory, comprising one or more storage mediums, storing instructions. The instructions, when executed by the at least one processor individually or collectively, may cause the electronic device to obtain a plurality of symbol groups related to narrowband random access channel (NPRACH) transmission of a narrowband-internet of things (NB-IoT) device. The instructions, when executed by the at least one processor individually or collectively, may cause the electronic device to, based on a designated number of symbol groups, divide the plurality of symbol groups into one or more combining groups. The instructions, when executed by the at least one processor individually or collectively, may cause the electronic device to obtain power values related to the one or more combining groups, by obtaining a power value related to each of the one or more combining groups. The instructions, when executed by the at least one processor individually or collectively, may cause the electronic device to, based on the power values related to the one or more combining groups, obtain a random access signal of the NB-IoT device.

According to an embodiment, the instructions, when executed by the at least one processor individually or collectively, may cause the electronic device to, for each of the one or more combining groups, perform a coherent combining operation. The instructions, when executed by the at least one processor individually or collectively, may cause the electronic device to obtain the power value for each of the one or more combining groups by obtaining a power value of a signal according to the coherent combining operation for each of the one or more combining groups.

According to an embodiment, the instructions, when executed by the at least one processor individually or collectively, may cause the electronic device to perform a correlation operation between at least two symbol groups among the plurality of symbol groups. The instructions, when executed by the at least one processor individually or collectively, may cause the electronic device to, based on a result of the correlation operation between the at least two symbol groups, determine the designated number.

According to an embodiment, the instructions, when executed by the at least one processor individually or collectively, may cause the electronic device to identify the at least two symbol groups among the plurality of symbol groups. The instructions, when executed by the at least one processor individually or collectively, may cause the electronic device to perform a coherent combining operation for each of the at least two symbol groups. The instructions, when executed by the at least one processor individually or collectively, may cause the electronic device to perform the correlation operation for the at least two symbol groups for which the coherent combining operation is performed.

According to an embodiment, the instructions, when executed by the at least one processor individually or collectively, may cause the electronic device to identify a real part of an output value of the correlation operation for the at least two symbols as the result of the correlation operation.

According to an embodiment, the random access signal may be transmitted according to the number of repetitions set for the NPRACH transmission. The plurality of symbol groups may be obtained based on repetition of the random access signal according to the number of repetitions.

According to an embodiment, one symbol group of the plurality of symbol groups may comprise 5 symbols.

According to an embodiment, the instructions, when executed by the at least one processor individually or collectively, may cause the electronic device to, based on a signal related to the NPRACH transmission, identify a frequency offset and a time offset. The instructions, when executed by the at least one processor individually or collectively, may cause the electronic device to obtain the plurality of symbol groups based on compensating the frequency offset and the time offset to the signal.

According to an embodiment, the electronic device may comprise a digital unit (DU). The signal related to the NPRACH transmission may be obtained through an antenna of a radio unit (RU).

According to an embodiment, the instructions, when executed by the at least one processor individually or collectively, may cause the electronic device to identify a summed power value of the power values related to the one or more combining groups. The instructions, when executed by the at least one processor individually or collectively, may cause the electronic device to, based on the summed power value that is greater than or equal to a designated power value, obtain the random access signal.

According to an embodiment, a method performed by an electronic device may comprise obtaining a plurality of symbol groups related to narrowband random access channel

(NPRACH) transmission of a narrowband-internet of things (NB-IoT) device. The method may comprise, based on a designated number of symbol groups, dividing the plurality of symbol groups into one or more combining groups. The method may comprise obtaining power values related to the one or more combining groups, by obtaining a power value related to each of the one or more combining groups. The method may comprise, based on the power values related to the one or more combining groups, obtaining a random access signal of the NB-IoT device.

According to an embodiment, the method may comprise, for each of the one or more combining groups, performing a coherent combining operation. The method may comprise obtaining the power value for each of the one or more combining groups by obtaining a power value of a signal according to the coherent combining operation for each of the one or more combining groups.

According to an embodiment, the method may comprise performing a correlation operation between at least two symbol groups among the plurality of symbol groups. The method may comprise, based on a result of the correlation operation between the at least two symbol groups, determining the designated number.

According to an embodiment, the method may comprise identifying the at least two symbol groups among the plurality of symbol groups. The method may comprise performing a coherent combining operation for each of the at least two symbol groups. The method may comprise performing the correlation operation for the at least two symbol groups for which the coherent combining operation is performed.

According to an embodiment, the method may comprise identifying a real part of an output value of the correlation operation for the at least two symbols as the result of the correlation operation.

According to an embodiment, the random access signal may be transmitted according to the number of repetitions set for the NPRACH transmission. The plurality of symbol groups may be obtained based on repetition of the random access signal according to the number of repetitions.

According to an embodiment, one symbol group of the plurality of symbol groups may comprise 5 symbols.

According to an embodiment, the method may comprise, based on a signal related to the NPRACH transmission, identifying a frequency offset and a time offset. The method may comprise obtaining the plurality of symbol groups based on compensating the frequency offset and the time offset to the signal.

According to an embodiment, the method may comprise identifying a summed power value of the power values related to the one or more combining groups. The method may comprise, based on the summed power value that is greater than or equal to a designated power value, obtaining the random access signal.

A non-transitory computer readable storage medium may store one or more programs. The one or more programs may comprise instructions, which, when executed by a processor of an electronic device, cause the electronic device to obtain a plurality of symbol groups related to narrowband random access channel (NPRACH) transmission of a narrowband-internet of things (NB-IoT) device. The one or more programs may comprise instructions, which, when executed by the processor of the electronic device, cause the electronic device to, based on a designated number of symbol groups, divide the plurality of symbol groups into one or more combining groups. The one or more programs may comprise instructions, which, when executed by the processor of the electronic device, cause the electronic device to obtain power values related to the one or more combining groups, by obtaining a power value related to each of the one or more combining groups. The one or more programs may comprise instructions, which, when executed by the processor of the electronic device, cause the electronic device to, based on the power values related to the one or more combining groups, obtain a random access signal of the NB-IoT device.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure.

Such a program (software module, software) may be stored in a random access memory, a non-volatile memory including a flash memory, a read only memory (ROM), an electrically erasable programmable read only memory (EEPROM), a magnetic disc storage device, an optical storage device (e.g., a compact disc-ROM (CD-ROM), digital versatile discs (DVDs), or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

Meanwhile, specific embodiments have been described in the detailed description of the present disclosure, and of course, various modifications are possible without departing from the scope of the present disclosure.

## Claims

1. An electronic device comprising:
a transceiver;
at least one processor comprising processing circuitry; and
memory, comprising one or more storage mediums, storing instructions,
wherein the instructions, when executed by the at least one processor individually or collectively, cause the electronic device to:
obtain a plurality of symbol groups related to narrowband random access channel (NPRACH) transmission of a narrowband-internet of things (NB-IoT) device,
based on a designated number of symbol groups, divide the plurality of symbol groups into one or more combining groups,
obtain power values related to the one or more combining groups, by obtaining a power value related to each of the one or more combining groups, and
based on the power values related to the one or more combining groups, obtain a random access signal of the NB-IoT device.

2. The electronic device of claim 1, wherein the instructions, when executed by the at least one processor individually or collectively, further cause the electronic device to:
for each of the one or more combining groups, perform a coherent combining operation, and
obtain the power value for each of the one or more combining groups by obtaining a power value of a signal according to the coherent combining operation for each of the one or more combining groups,

3. The electronic device of claim 1, wherein the instructions, when executed by the at least one processor individually or collectively, further cause the electronic device to:
perform a correlation operation between at least two symbol groups among the plurality of symbol groups, and
based on a result of the correlation operation between the at least two symbol groups, determine the designated number.

4. The electronic device of claim 3, wherein the instructions, when executed by the at least one processor individually or collectively, further cause the electronic device to:
identify the at least two symbol groups among the plurality of symbol groups,
perform a coherent combining operation for each of the at least two symbol groups, and
perform the correlation operation for the at least two symbol groups for which the coherent combining operation is performed.

5. The electronic device of claim 4, wherein the instructions, when executed by the at least one processor individually or collectively, further cause the electronic device to identify a real part of an output value of the correlation operation for the at least two symbols as the result of the correlation operation.

6. The electronic device of claim 1, wherein the random access signal is transmitted according to the number of repetitions set for the NPRACH transmission, and
wherein the plurality of symbol groups are obtained based on repetition of the random access signal according to the number of repetitions.

7. The electronic device of claim 1, wherein one symbol group of the plurality of symbol groups comprises 5 symbols.

8. The electronic device of claim 1, wherein the instructions, when executed by the at least one processor individually or collectively, further cause the electronic device to:
based on a signal related to the NPRACH transmission, identify a frequency offset and a time offset, and
obtain the plurality of symbol groups based on compensating the frequency offset and the time offset to the signal.

9. The electronic device of claim 8, wherein the electronic device comprises a digital unit (DU), and
wherein the signal related to the NPRACH transmission is obtained through an antenna of a radio unit (RU).

10. The electronic device of claim 1, wherein the instructions, when executed by the at least one processor individually or collectively, further cause the electronic device to:
identify a summed power value of the power values related to the one or more combining groups, and
based on the summed power value that is greater than or equal to a designated power value, obtain the random access signal.

11. A method performed by an electronic device, comprising:
obtaining a plurality of symbol groups related to narrowband random access channel (NPRACH) transmission of a narrowband-internet of things (NB-IoT) device,
based on a designated number of symbol groups, dividing the plurality of symbol groups into one or more combining groups,
obtaining power values related to the one or more combining groups, by obtaining a power value related to each of the one or more combining groups, and
based on the power values related to the one or more combining groups, obtaining a random access signal of the NB-IoT device.

12. The method of claim 11, wherein the method further comprises:
for each of the one or more combining groups, performing a coherent combining operation, and
obtaining the power value for each of the one or more combining groups by obtaining a power value of a signal according to the coherent combining operation for each of the one or more combining groups,

13. The method of claim 11, wherein the method further comprises:
performing a correlation operation between at least two symbol groups among the plurality of symbol groups, and
based on a result of the correlation operation between the at least two symbol groups, determining the designated number.

14. The method of claim 13, wherein the method further comprises:
identifying the at least two symbol groups among the plurality of symbol groups,
performing a coherent combining operation for each of the at least two symbol groups, and
performing the correlation operation for the at least two symbol groups for which the coherent combining operation is performed.

15. A non-transitory computer readable storage medium storing one or more programs, the one or more programs comprising instructions, which, when executed by a processor of an electronic device, cause the electronic device to:
obtain a plurality of symbol groups related to narrowband random access channel (NPRACH) transmission of a narrowband-internet of things (NB-IoT) device,
based on a designated number of symbol groups, divide the plurality of symbol groups into one or more combining groups,
obtain power values related to the one or more combining groups, by obtaining a power value related to each of the one or more combining groups, and
based on the power values related to the one or more combining groups, obtain a random access signal of the NB-IoT device.
